# EUROPEAN PATENT APPLICATION

(11) **EP 4 361 008 A1**
(43) Date of publication of application: **01.05.2024**
(21) Application number: 23161468.6
(22) Date of filing: 13.03.2023
(51) Int. Cl.: B62J 17/00, B62J 25/04

(54) **STRADDLED VEHICLE**

(30) Priority: 27.10.2022 JP 2022172146
(71) Applicant: Yamaha Hatsudoki Kabushiki Kaisha, Iwata-shi, Shizuoka 438-8501 (JP)
(72) Inventor: Akaradechakul, Nuttaporn, Samutprakarn (TH); Kongnakorn, Unnop, Samutprakarn (TH); Fujisaka, Masahiko, Samutprakarn (TH)
(74) Representative: Grünecker Patent- und Rechtsanwälte PartG mbB

(57) **Abstract**

A straddled vehicle (1) includes a seat (17), a cover (16), and a footboard (15). The cover (16) is disposed below the seat (17). The footboard (15) is disposed in front of the cover. The footboard (15) has a flat shape across the vehicle width direction. The footboard (15) includes a left footrest surface (23), a right footrest surface (24), and a central surface (25). The left footrest surface (23) has a slit-shaped non-slip pattern. The right footrest surface (24) has a slit-shaped non-slip pattern. The central surface (25) includes a front portion (51) and a rear portion (52). The front portion (51) expands in the vehicle width direction toward the front. The rear portion (52) is disposed behind the front portion (51). The rear portion (52) expands in the vehicle width direction toward the rear. Each of the front portion (51) and the rear portion (52) has an embossed shape with no slit-shaped non-slip pattern.

## Description

The present invention relates to a straddled vehicle.

Some straddled vehicles are provided with a footboard on which the rider's feet are placed. For example, the motorcycle disclosed in JP 2018-58456 A includes a footboard having a flat shape across the vehicle width direction. The footboard has a slit-shaped non-slip pattern.

It is desirable that the non-slip pattern has a high non-slip effect so that the foot does not slip while driving the vehicle. On the other hand, if the straddled vehicle has a flat footboard, the rider moves his/her feet above the footboard when getting in and out of the vehicle. For example, when getting into the vehicle from the left side, the right foot is moved from the left side of the footboard to the right side of the footboard through above the central portion of the footboard. At this time, if the foot is caught by the non-slip pattern, it is difficult to get into the vehicle smoothly. It is an object of the present invention to provide a straddled vehicle having a flat footboard that provides a high non-slip effect on the footboard during driving and enables smooth getting on and off. According to the present invention said object is solved by straddled vehicle having the features of independent claim 1. Preferred embodiments are laid down in the dependent claims.

A straddled vehicle according to an aspect of the embodiment includes a seat, a cover, and a footboard. The cover is disposed below the seat. The footboard is disposed in front of the cover. The footboard has a flat shape across the vehicle width direction. The footboard includes a left footrest surface, a right footrest surface, and a central surface. The left footrest surface has a slit-shaped non-slip pattern. The right footrest surface has a slit-shaped non-slip pattern. The central surface is disposed between the left footrest surface and the right footrest surface in the vehicle width direction. The central surface includes a front portion and a rear portion. The front portion expands in the vehicle width direction toward the front. The rear portion is disposed behind the front portion. The rear portion expands in the vehicle width direction toward the rear. The front and rear portions have an embossed shape with no slit-shaped non-slip pattern.

In the straddled vehicle according to the present aspect, the footboard is provided with a slit-shaped non-slip pattern on the left footrest surface and the right footrest surface on which the rider's feet are placed during driving. As a result, a high non-slip effect can be obtained during driving. Further, in the footboard, the central surface has a shape including the front portion that expands in the vehicle width direction toward the front and the rear portion that expands in the vehicle width direction toward the rear and there are no slit-shaped non-slip pattern at the front portion and the rear portion. Therefore, when the foot is moved on the central surface, the foot is prevented from being caught. This allows smooth getting in and out of the vehicle. Furthermore, since the front portion and the rear portion have embossed shapes, an appropriate non-slip effect can be obtained to the extent that smooth getting on and off of the vehicle is not hindered.

The central surface may include a first portion and a second portion. The second portion may be disposed adjacent to the first portion. The second portion may have a different pattern of embossed shape than the first portion. In this case, depending on the difference in the embossed pattern, an appropriate non-slip effect can be obtained depending on the location on the footboard.

The second portion may be disposed surrounding the first portion. The central surface may further include a third portion. The third portion may have a different pattern of embossed shape than the first and second portions. In this case, depending on the difference in the embossed pattern, an appropriate non-slip effect can be obtained depending on the location on the footboard.

The front portion may include a left front portion and a right front portion. The left front portion may extend leftward and forward to the front of the left footrest surface. The right front portion may extend rightward and forward to the front of the right footrest surface. Such a shape of the front portion provides an appropriate non-slip effect to the extent that smooth getting on and off of the vehicle is not hindered.

The left front portion may include a left tip portion disposed in front of the left footrest surface. The left tip portion may have a different pattern of embossed shape than the rest of the left front portion. The right front portion may include a right tip portion disposed in front of the right footrest surface. The right tip portion may have a different pattern of embossed shape than the rest of the right front portion. In this case, depending on the difference in the embossed pattern, an appropriate non-slip effect can be obtained depending on the location on the footboard.

The rear portion may include a left rear portion and a right rear portion. The left rear portion may extend leftward and rearward to the rear of the left footrest surface. The right rear portion may extend rightward and rearward to the rear of the right footrest surface. Such a shape of the rear portion provides an appropriate non-slip effect to the extent that smooth getting on and off of the vehicle is not hindered.

The maximum width of the footboard may be 435 mm or more and 531 mm or less. The maximum width of the footboard may be 386 mm or more and 580 mm or less. The wheelbase of the straddled vehicle may be 1143 mm or more and 1452 mm or less. The wheelbase of the straddled vehicle may be 1270 mm or more and 1320 mm or less.

The left footrest surface may include a first inner edge. The first inner edge may bend laterally inward at a first bending point between the front end and the rear end of the left footrest surface. The right footrest surface may include a second inner edge. The second inner edge may bend laterally inward at a second bending point between the front end and the rear end of the right footrest surface. Such a shape of the left footrest surface and the right footrest surface provides a high non-slip effect on the footboard during driving and enables smooth getting on and off.

The distance between the first bending point and the second bending point may be 169 mm or more and 206 mm or less. The distance between the front edge of the left footrest surface and the front edge of the right footrest surface may be 343 mm or more and 419 mm or less. The distance between the rear edge of the left footrest surface and the rear edge of the right footrest surface may be 392 mm or more and 479 mm or less.

### BRIEF DESCRIPTION OF THE DRAWINGS

FIG. 1 is a side view of a straddled vehicle according to an embodiment.
FIG. 2 is a top view of the straddled vehicle.
FIG. 3 is a top view of a footboard.
FIG. 4 is an enlarged view of a left footrest surface.
FIG. 5 is a top view showing a plurality of portions having different patterns of embossed shapes on the footboard.

### DETAILED DESCRIPTION

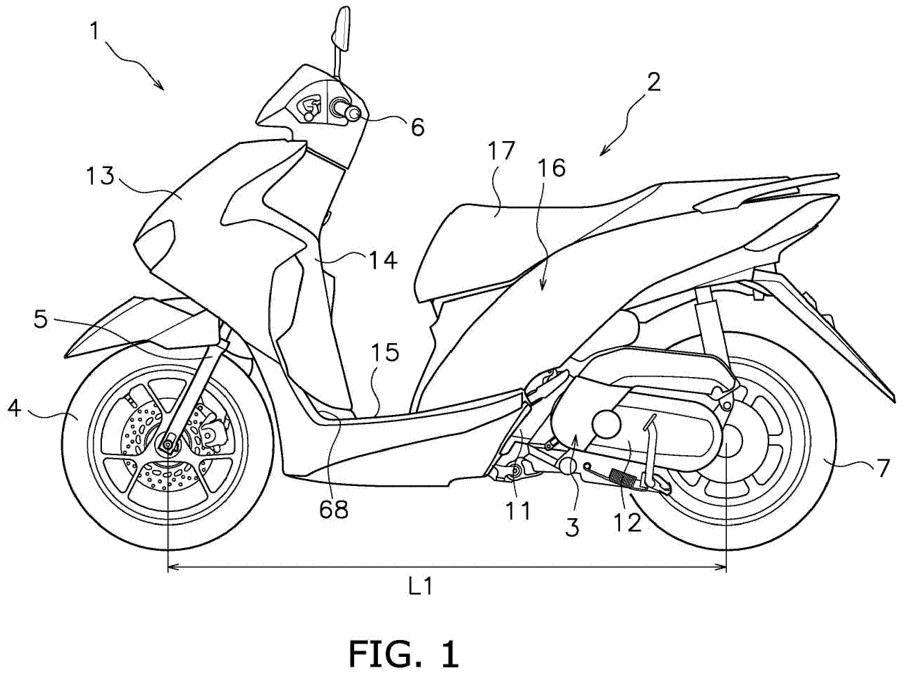

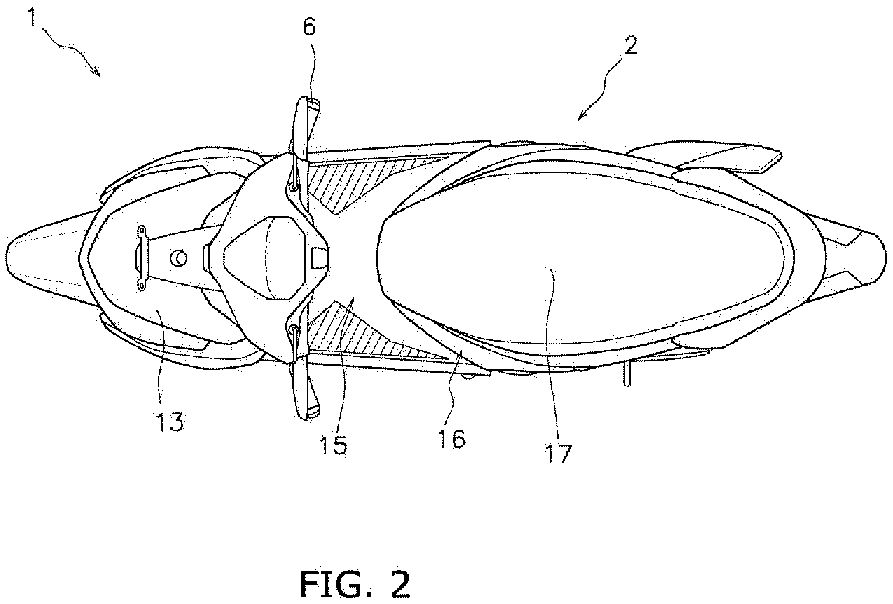

A straddled vehicle according to an embodiment will be described below with reference to the drawings. FIG. 1 is a side view of a straddled vehicle 1 according to the embodiment. FIG. 2 is a top view of the straddled vehicle 1. The straddled vehicle 1 according to the present embodiment is a scooter. As shown in FIGS. 1 and 2, the straddled vehicle 1 includes a vehicle body 2, a power unit 3, a front wheel 4, a front fork 5, a handle 6, and a rear wheel 7.

The power unit 3 is supported by the vehicle body 2. The power unit 3 includes an engine 11 and a transmission 12. The rear wheel 7 is rotatably supported by the power unit 3. The front wheel 4 is rotatably supported by the front fork 5. The handle 6 is connected to the front fork 5. As shown in FIG. 1, the wheelbase L1 of the straddled vehicle 1 may be 1143 mm or more and 1452 mm or less. The wheelbase L1 of the straddled vehicle may be 1270 mm or more and 1320 mm or less. The wheelbase L1 extends in the vehicle front-rear direction of the straddled vehicle 1 according to a rider sitting on the seat 17 with view in forward direction. A vertical direction of the straddled vehicle perpendicular to the vehicle front-rear direction and the width direction of the straddled vehicle 1 referrers to the vehicle up-down direction. The width direction coincides with the vehicle left-right direction.

The vehicle body 2 includes a front cover 13, a leg shield 14, a footboard 15, a rear cover 16, and a seat 17. The front cover 13 is disposed above the front wheel 4. The leg shield 14 is disposed behind the front cover 13. The seat 17 is disposed behind the leg shield 14. The rear cover 16 is disposed below the seat 17.

The footboard 15 is disposed in front of the rear cover 16. The footboard 15 is disposed between the leg shield 14 and the rear cover 16. The footboard 15 has a flat shape extending in the vehicle width direction.

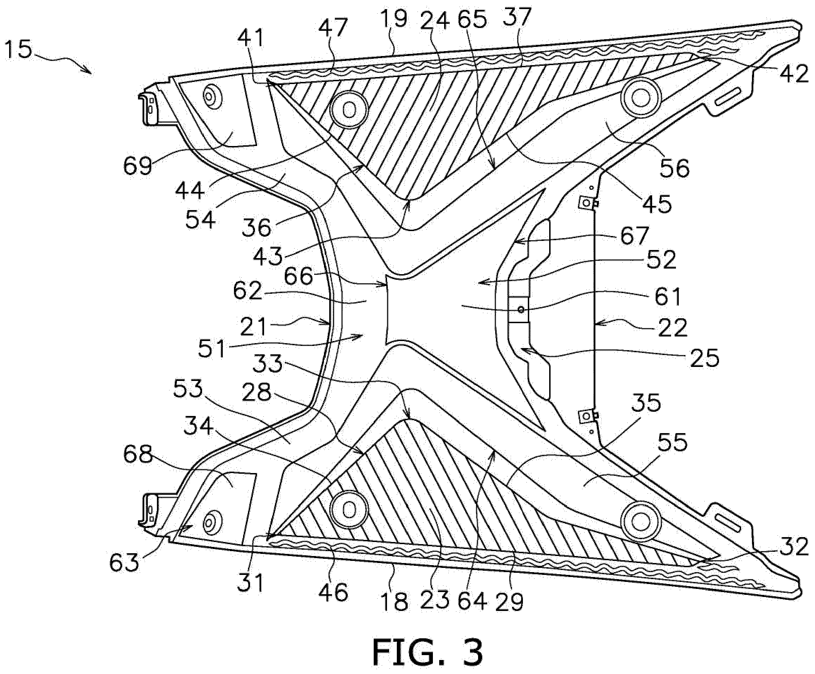

FIG. 3 is a top view of the footboard 15. As shown in FIG. 3, the footboard 15 includes a front edge 21 and a rear edge 22. The front edge 21 of the footboard 15 has a shape recessed rearward. A lower edge of the leg shield 14 is connected to the front edge 21 of the footboard 15. A rear edge 22 of the footboard 15 has a shape recessed forward. A lower edge of the rear cover 16 is connected to the rear edge 22 of the footboard 15.

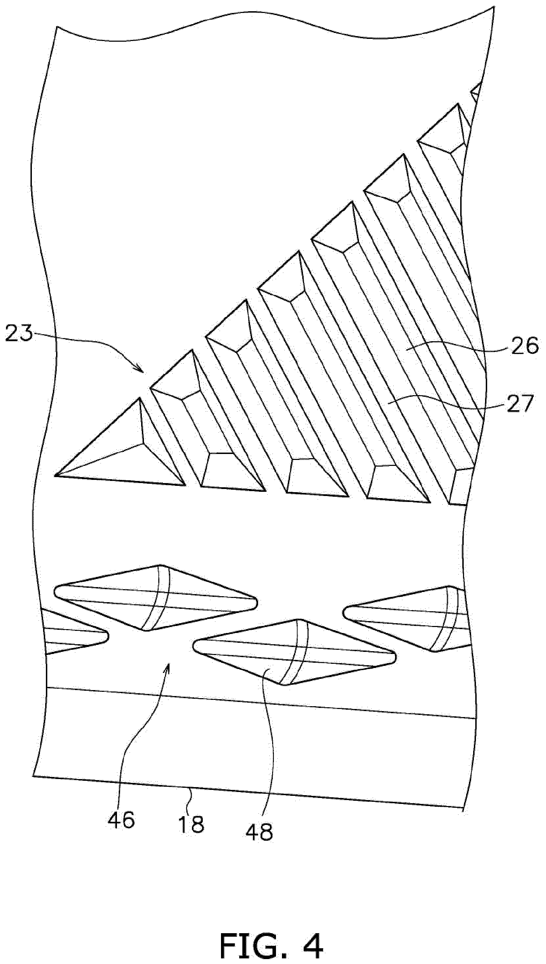

The footboard 15 includes a left footrest surface 23, a right footrest surface 24, and a central surface 25. FIG. 4 is an enlarged view of the left footrest surface 23. As shown in FIG. 4, the left footrest surface 23 has a slit-shaped non-slip pattern. Specifically, the left footrest surface 23 includes a plurality of protrusions 26 and a plurality of grooves 27. Each of the protrusions 26 and the grooves 27 extends linearly. The plurality of grooves 27 are disposed between the plurality of protrusions 26.

The plurality of protrusions 26 and the plurality of grooves 27 extend in a direction inclined with respect to the vehicle front-rear direction. The plurality of protrusions 26 and the plurality of grooves 27 extend forward and laterally inward. In the drawing, only one of the plurality of protrusions 26 is denoted by reference numeral 26, and the reference numerals of the other protrusions 26 are omitted. Only one of the plurality of grooves 27 is denoted by reference numeral 27, and the reference numerals of the other grooves 27 are omitted.

The left footrest surface 23 includes a first inner edge 28 and a first outer edge 29. The first inner edge 28 is bent laterally inward at a first bending point 33 between the front end 31 and the rear end 32 of the left footrest surface 23. The first inner edge 28 includes a first inclined portion 34 and a second inclined portion 35. The first inclined portion 34 extends from the front end 31 of the left footrest surface 23 toward the first bending point 33. The first inclined portion 34 is inclined rearward and laterally inward. The second inclined portion 35 extends from the first bending point 33 toward the rear end 32 of the left footrest surface 23. The second inclined portion 35 is inclined rearward and laterally outward. The first outer edge 29 extends linearly from the front end 31 toward the rear end 32 of the left footrest surface 23. The first outer edge 29 extends along the left edge 18 of the footboard 15.

The right footrest surface 24 has a slit-shaped non-slip pattern similar to that of the left footrest surface 23. The right footrest surface 24 includes a second inner edge 36 and a second outer edge 37. The second inner edge 36 bends laterally inward at a second bending point 43 between the front end 41 and the rear end 42 of the right footrest surface 24. The second inner edge 36 includes a third inclined portion 44 and a fourth inclined portion 45. The third inclined portion 44 extends from the front end 41 of the right footrest surface 24 toward the second bending point 43. The third inclined portion 44 is inclined rearward and laterally inward. The fourth inclined portion 45 extends from the second bending point 43 toward the rear end 42 of the right footrest surface 24. The fourth inclined portion 45 is inclined rearward and laterally outward. The second outer edge 37 extends linearly from the front end 41 toward the rear end 42 of the right footrest surface 24. The second outer edge 37 extends along the right edge 19 of the footboard 15.

The footboard 15 includes a left non-slip portion 46 and a right non-slip portion 47. The left non-slip portion 46 is disposed between the first outer edge 29 of the left footrest surface 23 and the left edge 18 of the footboard 15. As shown in FIG. 4, the left non-slip portion 46 includes a plurality of granular protrusions 48. A plurality of protrusions 48 are disposed along the left edge 18 of the footboard 15. In the drawings, only one of the plurality of projections 48 is denoted by reference numeral 48, and the reference numerals of other projections 48 are omitted. The right non-slip portion 47 is disposed between the second outer edge 37 of the right footrest surface 24 and the right edge 19 of the footboard 15. The right non-slip portion 47 includes a plurality of granular protrusions similar to the left non-slip portion 46.

The central surface 25 is disposed between the left footrest surface 23 and the right footrest surface 24 in the vehicle width direction. As shown in FIG. 3, the central surface 25 has an X-shape. The central surface 25 is not provided with a slit-shaped non-slip pattern, and the central surface 25 has an embossed shape. The central surface 25 includes a front portion 51 and a rear portion 52. The front portion 51 has a shape that expands in the vehicle width direction toward the front.

The front portion 51 includes a left front portion 53 and a right front portion 54. The left front portion 53 is located between the front edge 21 of the footboard 15 and the first inclined portion 34 of the left footrest surface 23. The left front portion 53 extends leftward and forward to the front of the left footrest surface 23. The right front portion 54 is located between the front edge 21 of the footboard 15 and the third inclined portion 44 of the right footrest surface 24. The right front portion 54 extends rightward and forward to the front of the right footrest surface 24.

The rear portion 52 is disposed behind the front portion 51. The rear portion 52 expands in the vehicle width direction toward the rear. The rear portion 52 includes a left rear portion 55 and a right rear portion 56. The left rear portion 55 is located between the second inclined portion 35 of the left footrest surface 23 and the rear edge 22 of the footboard 15. The left rear portion 55 extends leftward and rearward to the rear of the left footrest surface 23. The right rear portion 56 is located between the fourth inclined portion 45 of the right footrest surface 24 and the rear edge 22 of the footboard 15. The right rear portion 56 extends rightward and rearward to the rear of the right footrest surface 24.

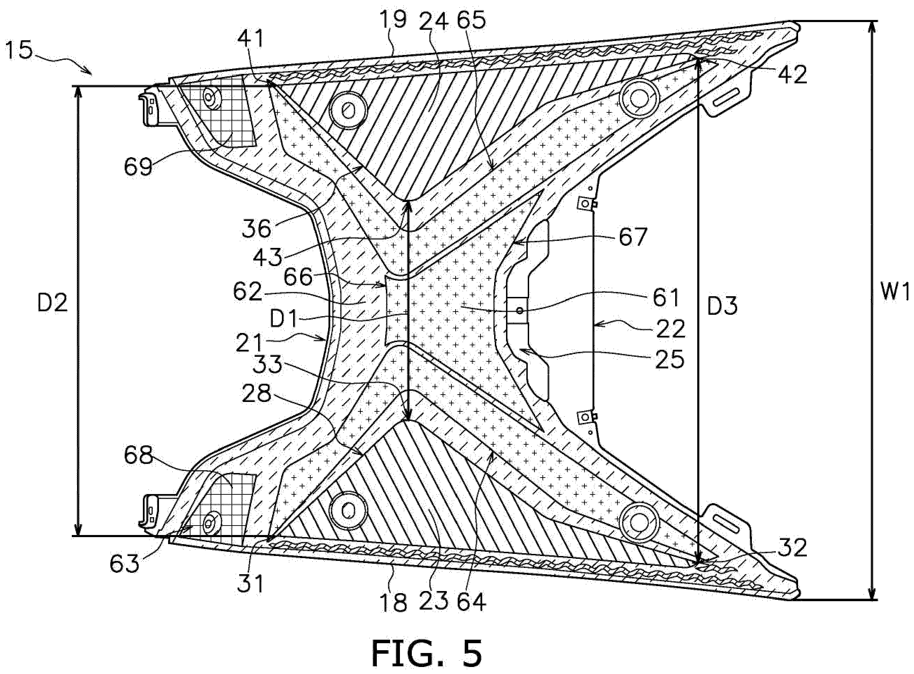

The central surface 25 includes a plurality of portions having different patterns of embossed shape. FIG. 5 is a top view showing a plurality of portions of the footboard 15 having different patterns of embossed shapes. In FIG. 5, the different embossed portions are hatched differently.

As shown in FIG. 5, the central surface 25 includes a first portion 61, a second portion 62, and a third portion 63. The first portion 61 has a first pattern of embossed shape. The first portion 61 is disposed between the left footrest surface 23 and the right footrest surface 24. The first portion 61 has an X-shape. A left edge 64 of the first portion 61 has a shape bent along the first inner edge 28 of the left footrest surface 23. A right edge 65 of the first portion 61 has a shape bent along the second inner edge 36 of the right footrest surface 24. A front edge 66 of the first portion 61 has a shape bent along the front edge 21 of the footboard 15. A rear edge 67 of the first portion 61 has a shape bent along the rear edge 22 of the footboard 15.

The second portion 62 is disposed adjacent to the first portion 61. The second portion 62 has a second pattern of embossed shape different from the first portion 61. The first pattern and the second pattern have embossed shapes by texturing. The roughness and depth of texturing are different between the first pattern and the second pattern. The second portion 62 is disposed to surround the first portion 61. The second portion 62 is disposed between the left edge 64 of the first portion 61 and the first inner edge 28 of the left footrest surface 23. The second portion 62 is disposed between the right edge 65 of the first portion 61 and the second inner edge 36 of the right footrest surface 24. The second portion 62 is disposed between the front edge 66 of the first portion 61 and the front edge 21 of the footboard 15. The second portion 62 is disposed between the rear edge 67 of the first portion 61 and the rear edge 22 of the footboard 15.

The third portion 63 has a third pattern of embossed shape that is different from the first portion 61 and the second portion 62. The third portion 63 includes a left tip portion 68 and a right tip portion 69. The left tip portion 68 is disposed in front of the left footrest surface 23. The left tip portion 68 is a part of the left front portion 53 described above. As shown in FIG. 1, the left tip portion 68 is inclined forward and upward. The left tip portion 68 has a different pattern of embossed shape than the rest of the left front portion 53. The third pattern has a plurality of granular embossed shape. For example, the third pattern includes a plurality of pyramidal or conical projections.

The right tip portion 69 is disposed in front of the right footrest surface 24. The right tip portion 69 is a part of the right front portion 54 described above. The right tip portion 69, like the left tip portion 68, is inclined forward and upward. The right tip portion 69 has a different pattern of embossed shape than the rest of the right front portion 54.

As shown in FIG. 5, the width of the footboard 15 is greatest at the rear portion 52 of the footboard 15. The maximum width W1 of the footboard 15 may be 435 mm or more and 531 mm or less. The maximum width W1 of the footboard 15 may be 386 mm or more and 580 mm or less.

The distance D1 between the first bending point 33 and the second bending point 43 may be 169 mm or more and 206 mm or less. The distance D2 between the front end 31 of the left footrest surface 23 and the front end 41 of the right footrest surface 24 may be 343 mm or more and 419 mm or less. The distance D3 between the rear end 32 of the left footrest surface 23 and the rear end 42 of the right footrest surface 24 may be 392 mm or more and 479 mm or less.

In the straddled vehicle 1 according to the present embodiment described above, the footboard 15 is provided with a slit-shaped non-slip pattern on the left footrest surface 23 and the right footrest surface 24 on which the rider's feet are placed during driving.. As a result, a high non-slip effect can be obtained during driving. Further, in the footboard 15, the central surface 25 has a shape including the front portion 51 that expands in the vehicle width direction toward the front and the rear portion 52 that expands in the vehicle width direction toward the rear. The front portion 51 and the rear portion 52 are not provided with a slit-shaped non-slip pattern. Therefore, when the foot is moved on the central surface 25, the foot is prevented from being caught. This allows smooth getting in and out of the vehicle. Furthermore, since the front portion 51 and the rear portion 52 have embossed shapes, an appropriate non-slip effect is obtained to the extent that smooth getting on and off of the straddled vehicle 1 is not hindered.

The shape of the central surface 25 described above facilitates the shedding of mud or water from the footboard 15 during driving. In addition, due to the shape of the central surface 25 described above, it is easier to sweep out dirt such as sand during cleaning. Thereby, the maintainability of the straddled vehicle 1 is improved.

An embodiment has been described as a scooter, but may be another vehicle.

The shape of the footboard 15 is not limited to that of the above embodiment, and may be changed. For example, the shapes of the left footrest surface 23 and the right footrest surface 24 may be changed. The distance D1-D3 between the left footrest surface 23 and the right footrest surface 24 is not limited to that in the above embodiment, and may be changed.

The shape of the central surface 25 is not limited to that of the above embodiment, and may be changed. For example, the shapes or arrangements of the first portion 61, the second portion 62, and the third portion 63 are not limited to those in the above embodiment, and may be changed. The number of embossed patterns on the central surface 25 is not limited to three. The central surface 25 may have less than three or more than three embossed patterns.

The length of the wheelbase L1 of the straddled vehicle 1 is not limited to that of the above embodiment, and may be changed. The maximum width W1 of the footboard 15 is not limited to that of the above embodiment, and may be changed.

### REFERENCE SIGNS LIST

15: Footboard, 16: Rear cover, 17: Seat, 23: Left footrest surface, 24: Right footrest surface, 25: Central surface, 28: First inner edge, 33: First bending point, 36: Second inner edge, 43: Second bending point, 51: Front portion, 52: Rear portion, 53: Left front portion, 54: Right front portion, 55: Left rear portion, 56: Right rear portion, 61: First portion, 62: Second portion, 63: Third portion, 68: Left tip portion, 69: Right tip portion

## Claims

1. A straddled vehicle (1) comprising:
a seat (17);
a cover (16) at lest partly disposed below the seat (17) with regard to a vehicle up-down direction; and
a footboard (15) disposed in front of the cover (16) with regard to the vehicle front-rear direction and having a flat shape in a vehicle width direction, wherein
the footboard (15) includes
a left footrest surface (23) having a slit-shaped non-slip pattern,
a right footrest surface (24) having a slit-shaped non-slip pattern, and
a central surface (25) disposed between the left footrest surface (23) and the right footrest surface (24) in the vehicle width direction,
the central surface (25) includes
a front portion (51) that expands in the vehicle width direction toward a front of the straddled vehicle (1) with regard to the vehicle front-rear direction, and
a rear portion (52) disposed behind the front portion (51) and expanding in the vehicle width direction toward a rear of the straddled vehicle (1) with regard to the vehicle front-rear direction, and
each of the front portion (51) and the rear portion (52) has an embossed shape with no slit-shaped non-slip pattern.

2. The straddled vehicle (1) according to claim 1, wherein the central surface (25) includes
a first portion (61), and
a second portion (62) disposed adjacent to the first portion (61) and having a different pattern of embossed shape than the first portion (61).

3. The straddled vehicle (1) according to claim 2, wherein the second portion (62) is disposed to surround the first portion (61).

4. The straddled vehicle (1) according to claim 2, wherein the central surface (25) further includes a third portion (63) having a different pattern of embossed shape than the first portion (61) and the second portion (62).

5. The straddled vehicle (1) according to any one of claims 1 to 4, wherein the front portion (51) includes
a left front portion (53) extending leftward with regard to a vehicle left-right direction and forward to a front of the left footrest surface (23) with regard to the vehicle front-rear direction, and
a right front portion (54) extending rightward with regard to the vehicle left-right direction and forward to a front of the right footrest surface (24) with regard to the vehicle front-rear direction.

6. The straddled vehicle (1) according to claim 5, wherein the left front portion (53) includes a left tip portion (68) disposed in front of the left footrest surface (23) with regard to the vehicle front-rear direction,
the left tip portion (68) has an embossed shape with a different pattern than a rest of the left front portion (53),
the right front portion (54) includes a right tip portion (69) disposed in front of the right footrest surface (24) with regard to the vehicle front-rear direction, and
the right tip portion (69) has an embossed shape with a different pattern than a rest of the right front portion (54).

7. The straddled vehicle (1) according to any one of claims 1 to 6, wherein the rear portion (52) includes
a left rear portion (55) extending leftward with regard to the vehicle left-right direction and rearward to a rear of the left footrest surface (23) with regard to the vehicle front-rear direction, and
a right rear portion (56) extending rightward with regard to the vehicle left-right direction and rearward to a rear of the right footrest surface (24) with regard to the vehicle front-rear direction.

8. The straddled vehicle (1) according to any one of claims 1 to 7, wherein a maximum width of the footboard (15) is 435 mm or more and 531 mm or less.

9. The straddled vehicle (1) according to any one of claims 1 to 7, wherein a maximum width of the footboard (15) is 386 mm or more and 580 mm or less.

10. The straddled vehicle (1) according to any one of claims 1 to 9, wherein a wheelbase (L1) of the straddled vehicle (1) is 1143 mm or more and 1452 mm or less.

11. The straddled vehicle (1) according to any one of claims 1 to 9, wherein a wheelbase (L1) of the straddled vehicle (1) is 1270 mm or more and 1320 mm or less.

12. The straddled vehicle (1) according to any one of claims 1 to 11, wherein the left footrest surface (23) includes a first inner edge (28) bent laterally inward at a first bending point (33) with regard to the vehicle left-right direction between a front end (31) and a rear end (32) of the left footrest surface (23), and
the right footrest surface (24) includes a second inner edge (36) bent laterally inward with regard to the vehicle left-right direction at a second bending point (43) between a front end (41) and a rear end (42) of the right footrest surface (24).

13. The straddled vehicle (1) according to claim 12, wherein a distance (D1) between the first bending point (33) and the second bending point (43) is 169 mm or more and 206 mm or less.

14. The straddled vehicle (1) according to claim 12 or 13, wherein a distance (D2) between the front end (31) of the left footrest surface (23) and the front end (41) of the right footrest surface (24) is 343 mm or more and 419 mm or less.

15. The straddled vehicle (1) according to any one of claims 12 to 14, wherein a distance (D3) between the rear end (32) of the left footrest surface (23) and the rear end (42) of the right footrest surface (24) is 392 mm or more and 479 mm or less.
